(19) Europäisches Patentamt
European Patent Office
Office européen des brevets

(11) **EP 4 478 137 A1**

(12) **EUROPÄISCHE PATENTANMELDUNG**

(43) Veröffentlichungstag:
**18.12.2024  Patentblatt 2024/51**

(21) Anmeldenummer: **23178732.6**

(22) Anmeldetag: **12.06.2023**

(51) Internationale Patentklassifikation (IPC):
**G05B 19/042** (2006.01)    **G05B 19/05** (2006.01)
**G05B 23/02** (2006.01)

(52) Gemeinsame Patentklassifikation (CPC):
**G05B 19/0428; G05B 23/0267;** G05B 2219/24103;
G05B 2219/24123

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Siemens Aktiengesellschaft
80333 München (DE)**

(72) Erfinder: **Lutz, Benjamin
76327 Pfinztal (DE)**

(74) Vertreter: **Siemens Patent Attorneys
Postfach 22 16 34
80506 München (DE)**

(54) **LEITSYSTEM FÜR EINE TECHNISCHE ANLAGE**

(57)    Die Erfindung betrifft Leitsystem (14) für eine technische Anlage umfassend
ein Automatisierungsgerät (20), welches ausgestaltet ist zum Steuern einer technischen Anlage zuvor projektierte oder programmierte Schrittketten (SK) mit zuvor projektierten oder programmierten Bausteinen (FB) ablaufen zu lassen,
den Bausteinen (FB) sind Prozessobjekte (PO) zugeordnet, wobei die Prozessobjekte (PO) Variablen (var) für Prozesswerte (PW) umfassen, um eine Bedienung zu vereinfachen wird vorgeschlagen, ein Alarmmeldesystem (40) um eine Schrittketten-Alarmkomponente (42) zu erweitern, um für die in den Schrittketten (SK) involvierten Prozessobjekte (PO) und Bausteine (FB) eine Querverweisliste (QV) von den Alarmmeldungen (A1,A2,A3,A4) zu den Prozessobjekten (PO) und den Alarmmeldungen (A1,A2,A3,A4) zu den Bausteinen (FB) zu ermitteln und in einer auf eine Schrittkette (SK) bezogenen Alarmstatus-Struktur (AS) als Datensatz abzubilden,
wobei der Visualisierungs-Generator (2) weiterhin dazu ausgestaltet ist bei einem Aufruf zur grafischen Darbietung der Schrittkette (SK) die Schrittketten-Alarmkomponente (42) nach einem aktuellen Alarmstatus abzufragen und die Alarmstatus-Struktur (AS) für die Schrittkette (SK) zu laden.

FIG 2

**Beschreibung**

Die Erfindung betrifft ein Leitsystem für eine technische Anlage umfassend ein Automatisierungsgerät, welches ausgestaltet ist, zum Steuern einer technischen Anlage zuvor projektierte oder programmierte Schrittketten mit zuvor projektierten oder programmierten Bausteinen ablaufen zu lassen, den Bausteinen sind Prozessobjekte zugeordnet, wobei die Prozessobjekte Variablen für Prozesswerte umfassen, einen Bedienstation-Server und wenigstens einen mit dem Bedienstation-Server verbundenen Bedienstation-Client, wobei der Bedienstation-Server dazu ausgebildet ist, Visualisierungsinformationen an den Bedienstation-Client zu übertragen, und wobei der Bedienstation-Client dazu ausgebildet ist, mittels der Visualisierungsinformationen eine grafische Darbietung der Schrittketten für einen Bediener der technischen Anlage anzuzeigen, weiterhin umfassend einen Visualisierungs-Generator der dazu ausgestaltet ist auf Basis der zuvor projektierten oder programmierten Bausteine mit ihren Prozessobjekten eine Ansicht von Zuständen und von Zustandsübergängen der Schrittketten zur Laufzeit der Schrittketten in einem Anlagenbild als Zustands-Objekte und Zustandsübergangs-Objekte darzustellen, weiterhin ausgestaltet bei einer Interaktion des Bedieners mit einem Zustandsübergangs-Objekt eine Detaildarstellung vom Zustandsübergang des jeweiligen Zustandsübergangs-Objektes darzustellen, weiterhin umfassend ein Alarmmeldesystem, welches dazu ausgestaltet ist während der Prozesssteuerung der technischen Anlage auftretende Alarme der jeweiligen Prozessobjekte und/oder Bausteine in einem Alarmhaushalt als Alarmmeldungen abzubilden.

Im Sinne der Erfindung wird unter Programmierung von Schrittketten das Erstellen eines Anwenderprogramms mit Hilfe eines SFC-Editors für Sequential Function Charts (SFCs) verstanden. In Bausteinen oder SFC-Bausteinen können Berechnungen projektiert werden und in Schritten, Transitionen oder Ablaufketten umgesetzt werden. In der Prozessautomatisierung werden Schrittketten bzw. Ablaufsteuerungen für eine zustands- oder ereignisgesteuerte Ausführung von Produktionsprozessen genutzt. Die SFC-Ablaufsteuerung steuert mit CFC (Continious Function Charts) erstellte Funktionen über Betriebs- und Zustandswechsel. SFCs werden in einer Engineering Station projektiert. Die Automatisierungs- und Operator-Station spezifischen Anteile werden ausgehend von einer projektierten Basis kompiliert und von der Engineering Station in das entsprechende Automatisierungsgerät und in den entsprechenden Bedienstation-Server geladen. Durch den Visualisierungs-Generator können Bediener zur Laufzeit die Zustände der Schrittketten und die Zustandsübergänge in den Detaildarstellungen, den sogenannten Lupen, überwachen und bei Bedarf auch manuell eingreifen.

Im Zuge der Bedienung und Beobachtung können die Schrittketten durch Bediener überwacht werden, um in bestimmten Anwendungsfällen auch manuell in die Abläufe eingreifen zu können, z.B. manuelles Schalten einer Transition, Bestätigung einer Transition nach einer Bedienaufforderung, usw..

Nach dem Stand der Technik bieten die visualisierten Schrittketten (SFC Visu) zur Laufzeit neben den eigentlichen Schrittketten auch visualisierte Lupen an, durch die der Bediener auf Grundlage einer Verschaltung erkennen kann, welche Bedingungen für den Übergang in den nächsten Schritt erforderlich sind und inwieweit sie gegenwärtig bereits erfüllt sind.

Die EP 3 528 074 B1 beschreibt ein Verfahren zum Überprüfen der Beziehung zwischen einem visuell auf einem Operator-Client eines Prozessleitsystems dargestellten und einem akustisch ausgegebenen Prozessalarm eines Prozessobjektes.

In der EP 3 067 768 B1 wird eine Automatisierungseinrichtung mit mindestens einem Automatisierungsgerät und einem Operator-System zur Visualisierung und Bedienung von Schrittketten einer Ablaufsteuerung offenbart, wobei während eines RUN-Betriebs des Automatisierungsgerätes aus den Schrittketten erzeugte Objekte verarbeitet werden, wobei die Objekte in das Automatisierungsgerät geladene, mittels eines Continuous Function Chart-Editors erstellte CFC-Funktionen parametrieren und aktivieren und wobei über Prozesswerte und Steuersignale die Interaktion und Verknüpfung zwischen den Objekten und den CFC-Funktionen bewerkstelligt werden.

Die EP 3 968 107 B1 zeigt ein Prozessüberwachungssystem mit zumindest einer ersten Bedieneinheit, welche mit einem Server in Verbindung steht, und der Server weist zur Überwachung einer Automatisierungsanlage einen Visualisierungsservice auf.

Nachteilig an den Prozessüberwachungssystemen ist es, dass es für einen Bediener nicht möglich ist aus den Lupen (Signalflussplänen) herauszuerkennen, ob eine Transition, also ein Zustandsübergang evtl. wegen eines anstehenden Alarmes den Zustand nicht wechseln kann. D.h. ein Operator kann nicht erkennen, ob in diesem oder im nächsten Zustand, in der aktuellen Transition usw. in den auszusteuernden oder zu beobachtenden Prozessobjekten ein verfahrenstechnischer Alarm vorliegt, der ggf. beim Abfahren der Schrittkette berücksichtigt werden muss - lediglich Alarme der Schrittkette selbst werden beim Stand der Technik berücksichtigt. Da von einem SFC vielzählige Prozessobjekte ausgesteuert oder beobachtet werden und diese in den visualisierten SFCs nicht zu ermitteln sind, ist es für den Bediener schwierig die beispielsweise in Meldefolgeanzeigen dargestellten verfahrenstechnischen Alarme einem SFC zuzuordnen, um entsprechend handeln zu können.

Es ist Aufgabe der vorliegenden Erfindung eine Bedienung von Schrittketten zu verbessern.

Die Aufgabe wird für das eingangs genannte Leitsystem dadurch gelöst, dass das Alarmmeldesystem um eine Schrittketten-Alarmkomponente erweitert ist, welche ausgestaltet ist, für die in den Schrittketten involvierten Prozessobjekte und Bausteine eine Querverweisliste von den Alarmmeldungen zu den Prozessobjekten und den Alarmmeldungen zu den Bausteinen zu ermitteln und in einer auf eine Schrittkette bezogenen Alarm-status-Struktur als Datensatz abzubilden,

wobei der Visualisierungs-Generator weiterhin dazu ausgestaltet, ist bei einem Aufruf zur grafischen Darbietung der Schrittkette die Schrittketten-Alarmkomponente nach einem aktuellen Alarmstatus abzufragen und die Alarmstatus-Struktur für die Schrittkette zu laden.

Jetzt ist mit der Erfindung möglich eine Alarmstatusbildung für eine Transition bzw. einen Zustandsübergang zu generieren und in den bekannten Lupen zur Ansicht zu bringen. Erfindungsgemäß wurde ein automatisch sich integrierendes Alarmmanagement für die jeweils zu koordinierenden Prozessobjekte der verfahrenstechnischen Anlagen auf einem Bedienstation-Server und einem Bedienstation Client geschaffen.

Über die projektierten und zur Laufzeit bekannten Prozesswerte in Zuständen und Transitionen können nun die jeweils involvierten Prozessobjekte ermittelt werden, um sich auf deren Alarme anmelden zu können, greift die Schrittketten-Alarmkomponente bei einem Ladevorgang eines Schrittkettenbildes auf die für die Dynamisierung notwendigen SFC-Variablen zu, um wie beschrieben daraus die relevanten Prozessobjekte ermitteln zu können. Berücksichtigt werden hierbei sowohl die SFC-Variablen, die im Prozessabbild liegen, als auch diese, die erst beim Öffnen einer Lupe Ad Hoc angefordert werden.

In einer weiter verbesserten Ausgestaltung ist die Schrittketten-Alarmkomponente dazu ausgestaltet anhand der Querverweisliste in die Alarmstatus-Struktur nur die neuesten und nicht quittierten Alarmmeldungen abzubilden.

Tritt ein verfahrenstechnischer Alarm auf, kann die Schrittketten-Alarmkomponente nun genau bestimmen, für welchen SFC und welchen Zustand oder welchen Zustandsübergang (Transision) der Alarmstatus geändert werden muss. Liegen mehrere Alarme gleichzeitig vor, "verdichtet" die Schrittketten-Alarmkomponente die Alarme und berücksichtigt bei der Berechnung nur den wichtigsten, neuesten und nicht quittierten Alarm.

Eine genauere Selektion ist möglich, wenn die Schrittketten-Alarmkomponente dazu ausgestaltet ist anhand der Querverweisliste in die Alarmstatus-Struktur nur Alarmmeldungen eines bestimmtem Alarmtyps abzubilden.

Die Alarmstatus-Struktur kann demnach auf alle Alarme auf den neusten, wichtigsten und nicht quittierten Alarm und davon nur auf die wesentlichen Attribute wie Alarmfarbe, Alarmtyp H steht für High, W für Warning, L für Low reduziert werden.

Die Schrittketten-Alarmkomponente ist dazu ausgestaltet, eine Datenstruktur eines Bausteins, insbesondere eines SFC-Bausteins für die Schrittketten, zu erweitern. Denn erst durch das Verschalten von SFC-Instanzen mit Bausteinen und Signalen der Basisautomatisierung kommt man zu einer funktionsfähigen Ablaufsteuerung, und die von der Schrittketten-Alarmkomponente bereitgestellten Sammelalarme müssen nur einmal bei Änderung eines Alarms berechnet und abgelegt werden.

Für jede Visualisierung einer Schrittkette durch den Visualisierungs-Generator wird dann auf diesen sammelalarmrepräsentierenden Alarm-Status der Zustände und Transitionen der jeweiligen Schrittkette zurückgegriffen.

Eine weitere Verbesserung der Schrittketten-Alarmkomponente sieht vor, dass sie dazu ausgestaltet ist für ein Zustandsübergangs-Objekt einer Schrittkette die Bausteine, insbesondere für CFC-Bausteine, die den Bausteinen zugeordneten Prozessobjekten und die den Prozessobjekten zugeordneten Alarmmeldungen in einer Baumstruktur abzubilden.

Für die Schrittketten spezifische Bildung eines Alarmstatus für ein Zustandsübergangs-Objekt werden Prozesswerte von Prozessobjekten aus unterschiedlichen CFC-Bausteinen über logische Verknüpfungen ausgewertet. Ist die logische Verknüpfung erfüllt, wird der vorgesehene Zustandswechsel eingeleitet. Die für eine Transition zu beobachteten und logisch zu verknüpfenden Prozesswerte werden projektiert und sind für die SFC-Visualisierung (hier die Lupe) in der Laufzeitumgebung bekannt. In Zuständen werden im Gegensatz zur Transition Prozesswerte nicht beobachtet, sondern gesetzt. Über die projektierten und zur Laufzeit bekannten Prozesswerte in Zuständen und Transitionen können nun die jeweils involvierten Prozessobjekte ermittelt werden, um sich auf deren Alarme anmelden zu können. Wird ein Alarm gemeldet, so kann bestimmt werden, ob dieser zur Bildung des Sammelalarms notwendig ist und zu welchem Zustandsübergangs-Objekt oder zu welchem Zustand dieser Alarm gehört.

Ein Erkennen von Alarmen wird weiterhin dadurch vereinfacht, dass der Visualisierungs-Generator dazu ausgestaltet ist, bei einem Aufruf zur grafischen Darbietung der Schrittkette neben die Zustands-Objekte und die Zustandsübergangs-Objekte Alarmmarker zu setzen, in welchen der jeweilige das ZustandsObjekt und/oder das Zustandsübergangs-Objekt betreffende Alarmtyp angezeigt wird.

Um weitere Eingaben machen zu können ist der Alarmmarker als ein interaktives Bedienobjekt ausgestaltet und der Visualisierungs-Generator ist weiterhin dazu ausgestaltet bei einer Interaktion mit dem Alarmmarker eine Alarmansicht einzublenden. Wählt ein Bediener über einen Alarmmarker einen Alarm-status eines Zustands oder eines Zustandsübergangs an, so wird ihm das Faceplate des prior alarmgebenden Prozessobjekts geöffnet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, die im Zusammenhang mit den Zeichnungen näher erläutert werden. Es zeigen:

FIG 1 ein erfindungsgemäßes Leitsystem in einer schematischen Darstellung,

FIG 2 eine Alarmstatusbildung für einen Zustandsübergang,

FIG 3 grafische Oberflächen des Leitsystems für Schrittketten,

FIG 4 eine Alarmtypenanzeige in Schrittketten und

FIG 5 eine Datenstruktur für den Alarmstatus.

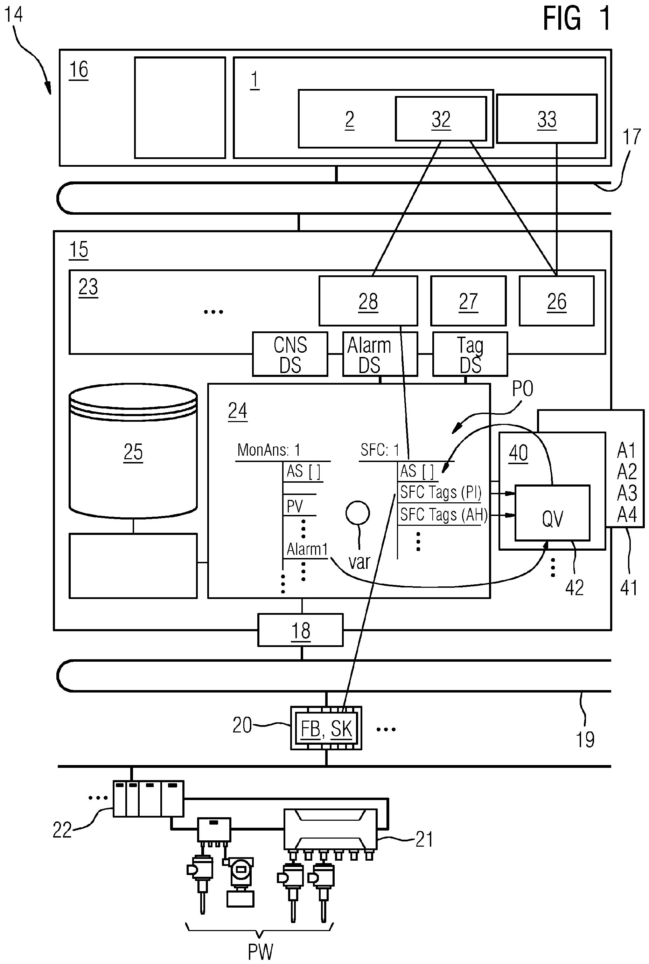

In FIG 1 ist ein Leitsystem 14 für die Bedienung und Beobachtung der als Prozessanlage ausgebildeten technischen Anlage schematisch dargestellt. Das Leitsystem 14 umfasst einen Bedienstation-Server 15 und einen Bedienstation-Client 16. Der eine Bedienstation-Server 15 und der Bedienstation-Client 16 sind über einen Terminalbus 17 miteinander und optional mit nicht dargestellten weiteren Komponenten des Leitsystems 14 wie einem Archivserver oder einem Engineering Station Server verbunden.

Ein Bediener kann zum Zwecke des Bedienens und Beobachtens über den Bedienstation-Client 16 mittels des Terminalbus 17 auf den Bedienstation-Server 15 zugreifen. Der Terminalbus 17 kann, ohne sich darauf zu beschränken, beispielsweise als Industrial Ethernet ausgebildet sein.

Der Bedienstation-Server 15 weist eine Geräteschnittstelle 18 auf, die mit einem Anlagenbus 19 verbunden ist. Über diese Geräteschnittstelle 19 ist der Bedienstation-Server 15 mit einem Automatisierungsgerät 20 sowie mit weiteren Komponenten der verfahrenstechnischen Anlage wie Peripheriegeräten 21,22 verbunden und kann mit diesen kommunizieren. Der Anlagenbus 19 kann, ohne sich darauf zu beschränken, beispielsweise als Industrial Ethernet ausgebildet sein.

Auf dem Bedienstation-Server 15 sind (unter anderem) ein Visualisierungsdienst 23, ein Prozessabbild 24 und ein Konfigurationsspeicher 25 implementiert. Der in dem Bedienstation-Server 15 integrierte Visualisierungsdienst 23 initiiert eine Übertragung von Visualisierungsinformationen an den Bedienstation-Client 16. Der Bedienstation-Client 16 ist dazu ausgebildet, eine Visualisierung, d.h. eine grafische Darbietung, insbesondere von grafischen Repräsentationen technischer Objekte, zum Bedienen und Beobachten der Prozessanlage darzustellen.

Das Automatisierungsgerät 20 ist ausgestaltet zum Steuern der technischen Anlage, dazu werden zuvor projektierte oder programmierte Schrittketten SK mit zuvor projektierten oder programmierten Bausteinen FB in dem Automatisierungsgerät 20, zum Ablauf gebracht.

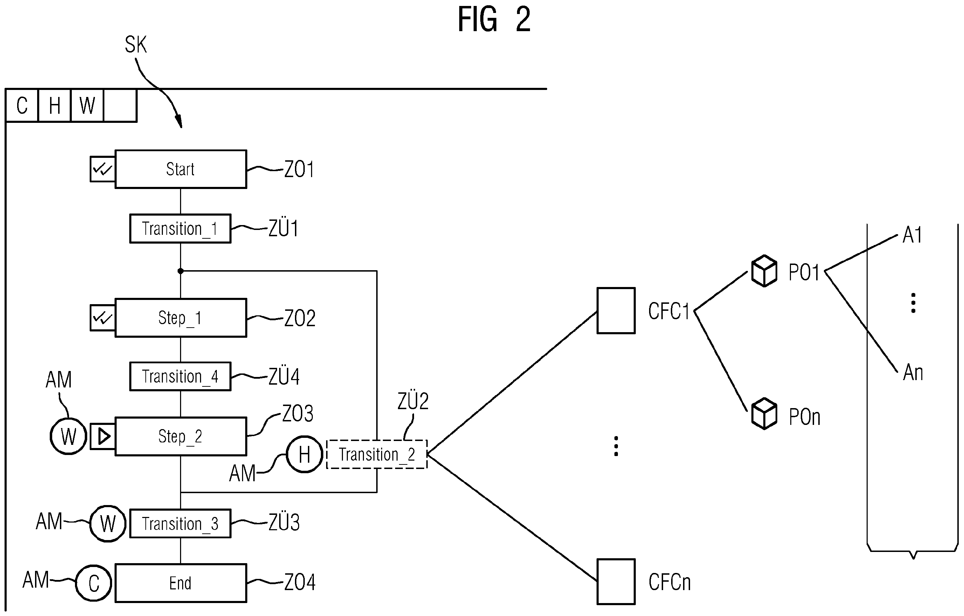

Den Bausteinen FB sind Prozessobjekte PO zugeordnet, wobei die Prozessobjekte PO Variablen var für Prozesswerte PW umfassen. Die Bausteine FB können auch als Continuous Function Chart-Bausteine CFC (siehe FIG 2) ausgestaltet sein.

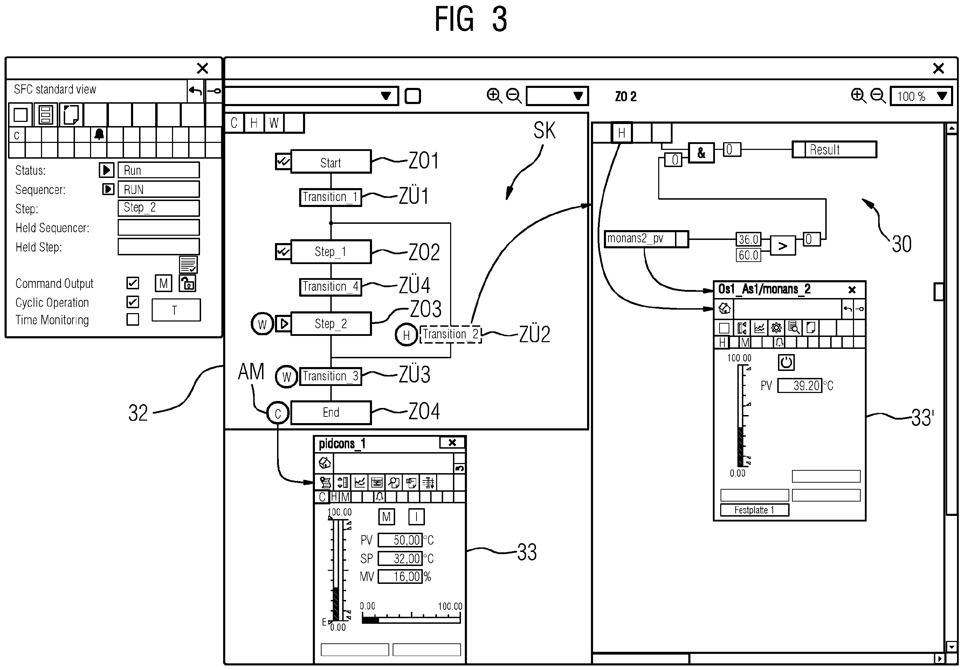

Der Visualisierungs-Generator 2 ist dazu ausgestaltet auf Basis der zuvor projektierten oder programmierten Bausteine FB mit ihren Prozessobjekten PO eine Ansicht von Zuständen und von Zustandsübergängen, siehe hierzu FIG 3, der Schrittketten SK zur Laufzeit der Schrittketten SK in einem Anlagenbild 1 als Zustands-Objekte ZO1,ZO2,ZO3,ZO4 und Zustandsübergangs-Objekte ZÜ1,ZÜ2,ZÜ3,ZÜ4 darzustellen, weiterhin ausgestaltet bei einer Interaktion des Bedieners mit einem Zustandsübergangs-Objekt ZÜ1,ZÜ2,ZÜ3 eine Detaildarstellung 30 vom Zustandsübergang des jeweiligen Zustandsübergangs-Objektes ZÜ1,ZÜ2,ZÜ3 darzustellen.

In dem Bedienstation-Server 15 ist ein Alarmmeldesystem 40 integriert. Das Alarmmeldesystem 40 ist ausgestaltet, während der Prozesssteuerung der technischen Anlage auftretende Alarme der jeweiligen Prozessobjekte PO und/oder Bausteine FB bzw. CFCs in einem Alarmhaushalt 41 als Alarmmeldungen A1,A2,A3,A4 abzubilden. Aus dem Prozessabbild 24 werden die Alarme der Prozessobjekte PO, beispielsweise MonAns1 oder SFC1 an das Alarmmeldesystem 40 weitergereicht. Das Alarmmeldesystem 40 ist um eine Schrittketten-Alarmkomponente 42 erweitert, welche ausgestaltet ist, für die in den Schrittketten SK involvierten Prozessobjekte PO und Bausteine FB eine Querverweisliste QV von den Alarmmeldungen A1,A2,A3,A4 zu den Prozessobjekten PO und den Alarmmeldungen A1,A2,A3,A4 zu den Bausteinen FB zu ermitteln. Nun hat man eine Beziehung zwischen Alarmen und Prozessobjekten PO bzw. Bausteinen FB, welche auf eine bestimmte Schrittkette SK abgebildet wird. Der Visualisierungs-Generator 2 ist weiterhin dazu ausgestaltet, beim Aufruf zur grafischen Darbietung der Schrittkette SK (siehe FIG 2) die Schrittketten-Alarmkomponente 42 nach einem aktuellen Alarmstatus abzufragen und die Alarmstatusstruktur AS für die Schrittkette SK zu laden. Über einen Repräsentationsdienst 28 wird der Alarmstatus AS für die jeweilige Schrittkette SK geladen und für die Schrittkettenansicht 32 bereitgestellt. Der Dynamisierungsdienst 26 arbeitet ebenfalls mit der bereitgestellten Alarmstatus-Struktur AS und kann sie in einer zusätzlichen Alarmansicht 33 die bereitgestellten Daten auswerten.

Mit der FIG 2 ist eine beispielhafte Alarmstatusbildung für das Zustandsübergangsobjekt ZÜ2 dargestellt. Die Schrittkette SK verfügt über die Zustandsobjekte ZO1,ZO2,ZO3 und ZO4. Zwischen dem ersten Zustandsobjekt ZO1 und dem zweiten Zustandsobjekt ZO2 befindet sich ein erstes Zustandsübergangsobjekt ZÜ1, welches eine erste Transition darstellt. Will ein Bediener nun das zweite Zustandsobjekt ZÜ2 interaktiv anwählen, so kann er, wie in FIG 3 gezeigt, detaillierte Alarminformationen erhalten. Denn, die Schrittketten-Alarmkomponente 42 hat nun dafür gesorgt, dass dem zweiten Zustandsübergangsobjekt ZÜ2 für eine bestimmte Schrittkette SK die Bausteine FB insbesondere für einen ersten CFC-Baustein CFC1 bis zu einen n-ten CFC-Baustein CFCn, die den Bausteinen CFC1,...,CFCn zugeordneten Prozessobjekte PO1 , ...,POn und die den Prozessobjekten PO1,...,POn zugeordneten Alarmmeldungen A1,...,An in einer Baumstruktur abgebildet sind.

Der in FIG 1 beschriebene Visualisierungsgenerator 2 ist weiterhin dazu ausgestaltet, bei einem Aufruf zur grafischen Darbietung der Schrittkette SK neben den dritten Zustandsobjekt ZO3 und den vierten Zustandsobjekt ZO4 Alarmmarker AM zu setzen. In den jeweiligen Alarmmarkern kann ein Alarmtyp H,W,L angezeigt werden. Für das dritte Zustandsobjekt ZO3 wird der Alarmtyp W (Warnung) in dem Alarmmarker AM dargestellt. Für das vierte Zustandsobjekt ZO4 wird in dem Alarmmarker AM der Alarmtyp C (Critical) dargestellt. Für das zweite Zustandsübergangsobjekt ZÜ2 wird in dem zugehörigen Alarmmarker AM der Alarmtyp H (High) angezeigt. Da über die Baumstruktur bzw. über die Alarmstatus-Struktur AS nun alle Alarme die die Transition der zweiten Zustandsobjektes ZÜ2 betreffen, bekannt sind, können diese auch entsprechend dargestellt werden (siehe hierzu FIG 3).

Gemäß FIG 3 sind zusätzlich zu der Schrittkettenansicht 32 der Schrittkette SK die Alarmansicht 33 und die Detaildarstellung 30 abgebildet. In der Detaildarstellung 30 kann eine weitere Alarmansicht 33' der zweiten Transition bzw. des zweiten Zustandsübergangsobjektes ZÜ2 dargestellt werden.

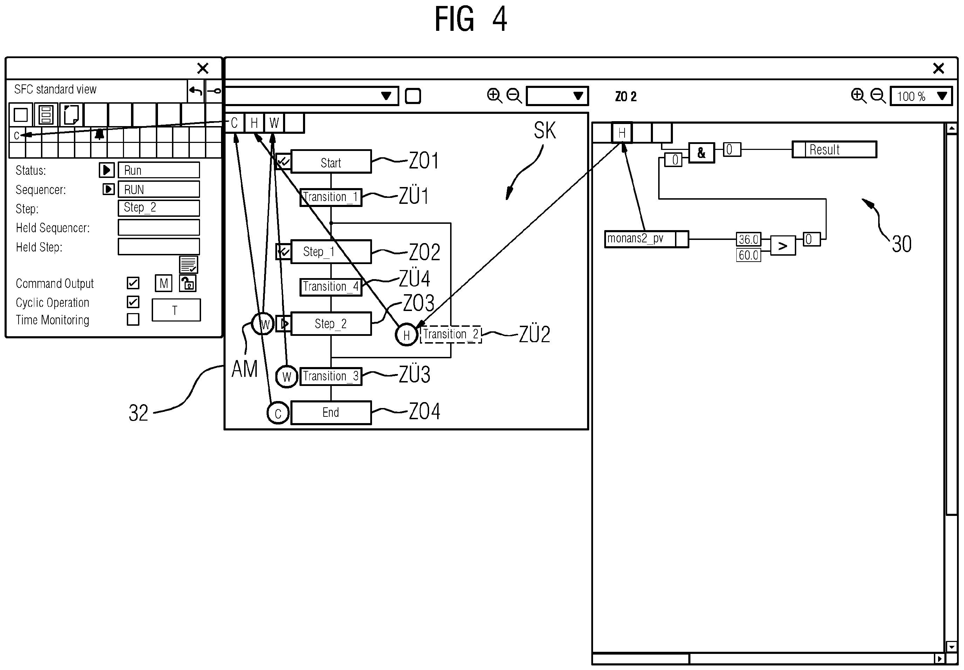

Mit der FIG 4 werden noch einmal die Zusammenhänge der Abbildung der Alarmstruktur AS zu den Schrittketten SK dargestellt. Ausgehend von einem SFC Standard Faceplate, in dem der Alarmtyp C für kritisch angezeigt wird, kann die Schrittkettenansicht 32 geöffnet werden. Oben links in der Schrittkettenansicht 32 wird der Alarmtyp C aufgezeigt und man kann sofort sehen, dass das vierte Zustandsobjekt ZO4 den kritischen Alarmtyp C aufweist. Da oben links in der Schrittkettenansicht 32 auch der Alarmtyp H für High angezeigt wird, kann ein Bediener sofort sehen, dass der High-Alarm dem zweiten Zustandsübergangsobjekt ZÜ2 der zweiten Transition zugeordnet ist. Durch eine Interaktion mit dem zweiten Zustandsübergangsobjekt ZÜ2 kann die Detaildarstellung 30 geöffnet werden und in der Detaildarstellung 30 ist eine weitere Alarmansicht 33' zu sehen, anhand derer der Bediener den eventuellen Fehler ermitteln kann.

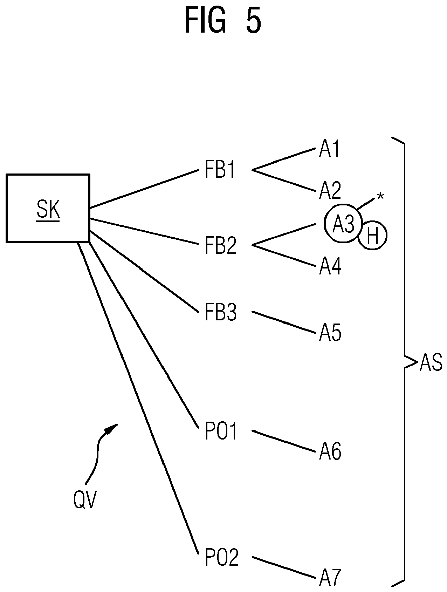

Mit der FIG 5 ist die Alarmstatus-Struktur AS unter Zuhilfenahme der Querverweisliste QV dargestellt. Mit dem Beispiel aus FIG 5 soll auch eine weitere Funktion der Schrittketten-Alarmkomponente 42 erläutert werden. Die Schrittketten-Alarmkomponente 42 ist dazu ausgestaltet, anhand der Querverweisliste QV in die Alarmstatus-Struktur AS nur Alarmmeldungen eines bestimmten Alarmtyps abzubilden. Beispielsweise hat die dritte Alarmmeldung A3 mit Sternchen gekennzeichnet, den Alarmtyp H (High), welches den zweiten Baustein FB2 zugeordnet ist. Demnach kann die Schrittketten-Alarmkomponente 42 nur auf einen bestimmten Typ, nämlich hier den Alarmtyp H filtern und auch nur diese Alarmtypen an eine aufzurufende Schrittkettenansicht 32 weitergeben.

Als Beispiel könnten in dem Alarmhaushalt für ein Prozessobjekt mehrere Alarme = {Alarm 1, Alarm 2, Alarm 3, ...Alarm n} vorkommen, wobei hier Alarm 3 der wichtigste, neueste und nicht quittierte ist. Dann kann in der Alarmstatus-Struktur AS nur der Alarm 3 gefiltert werden.

```
Alarmstatus =
{Alarm3.Typ,Alarm3.Farbe,Alarm3.Quittierzustand} =
{H,red,uack} (uack = unacknowledged / nicht quittiert).
```

## Patentansprüche

1. Leitsystem (14) für eine technische Anlage umfassend ein Automatisierungsgerät (20), welches ausgestaltet ist zum Steuern einer technischen Anlage zuvor projektierte oder programmierte Schrittketten (SK) mit zuvor projektierten oder programmierten Bausteinen (FB) ablaufen zu lassen,

   den Bausteinen (FB) sind Prozessobjekte (PO) zugeordnet, wobei die Prozessobjekte (PO) Variablen (var) für Prozesswerte (PW) umfassen,
   einen Bedienstation-Server (15) und wenigstens einen mit dem Bedienstation-Server (15) verbundenen Bedienstation-Client (16), wobei der Bedienstation-Server (15) dazu ausgebildet ist, Visualisierungsinformationen an den Bedienstation-Client (16) zu übertragen,
   und wobei der Bedienstation-Client (16) dazu ausgebildet ist, mittels der Visualisierungsinformationen eine grafische Darbietung der Schrittketten (SK) für einen Bediener der technischen Anlage anzuzeigen, weiterhin umfassend

einen Visualisierungs-Generator (2) der dazu ausgestaltet ist, auf Basis der zuvor projektierten oder programmierten Bausteine (FB) mit ihren Prozessobjekten (PO) eine Ansicht von Zuständen und von Zustandsübergängen der Schrittketten (SK) zur Laufzeit der Schrittketten (SK) in einem Anlagenbild (1) als Zustands-Objekte (ZO1,ZO2,ZO3) und Zustandsübergangs-Objekte (ZÜ1,ZÜ2,ZÜ3) darzustellen, weiterhin ausgestaltet bei einer Interaktion des Bedieners mit einem Zustandsübergangs-Objekt (ZÜ1,ZÜ2,ZÜ3) eine Detaildarstellung (30) vom Zustandsübergang des jeweiligen Zustandsübergangs-Objektes (ZÜ1,ZÜ2,ZÜ3) darzustellen, weiterhin umfassend ein Alarmmeldesystem (40), welches dazu ausgestaltet ist, während der Prozesssteuerung der technischen Anlage auftretende Alarme der jeweiligen Prozessobjekte (PO) und/oder Bausteine (FB) in einem Alarmhaushalt (41) als Alarmmeldungen (A1,A2,A3,A4) abzubilden,

**dadurch gekennzeichnet, dass** das Alarmmeldesystem (40) um eine Schrittketten-Alarmkomponente (42) erweitert ist, welche ausgestaltet ist, für die in den Schrittketten (SK) involvierten Prozessobjekte (PO) und Bausteine (FB) eine Querverweisliste (QV) von den Alarmmeldungen (A1,A2,A3,A4) zu den Prozessobjekten (PO) und den Alarmmeldungen (A1,A2,A3,A4) zu den Bausteinen (FB) zu ermitteln und in einer auf eine Schrittkette (SK) bezogenen Alarmstatus-Struktur (AS) als Datensatz abzubilden,

wobei der Visualisierungs-Generator (2) weiterhin dazu ausgestaltet ist bei einem Aufruf zur grafischen Darbietung der Schrittkette (SK) die Schrittketten-Alarmkomponente (42) nach einem aktuellen Alarmstatus abzufragen und die Alarmstatus-Struktur (AS) für die Schrittkette (SK) zu laden.

2. Leitsystem (14) nach Anspruch 1, wobei die Schrittketten-Alarmkomponente (42) dazu ausgestaltet ist anhand der Querverweisliste (QV) in die Alarmstatus-Struktur (AS) nur die neuesten und nicht quittierten Alarmmeldungen (A1,A2,A3,A4) abzubilden.

3. Leitsystem (14) nach Anspruch 1 oder 2, wobei die Schrittketten-Alarmkomponente (42) dazu ausgestaltet ist anhand der Querverweisliste (QV) in die Alarmstatus-Struktur (AS) nur Alarmmeldungen (A1,A2,A3,A4) eines bestimmtem Alarmtyps (H,W,L) abzubilden.

4. Leitsystem (14) nach einem der Ansprüche 1 bis 3, wobei die wobei die Schrittketten-Alarmkomponente (42) dazu ausgestaltet eine Datenstruktur eines Bausteins (FB), insbesondere eines SFC-Bausteins für die Schrittketten (SK), zu erweitern.

5. Leitsystem (14) nach einem der Ansprüche 1 bis 4, wobei die Schrittketten-Alarmkomponente (42) dazu ausgestaltet ist für ein Zustandsübergangs-Objekt (ZÜ1,ZÜ2,ZÜ3) einer Schrittkette (SK) die Bausteine (FB), insbesondere für CFC-Bausteine (CFC1,..CFCn), die den Bausteinen (FB) zugeordneten Prozessobjekte (PO1,...,POn) und die den Prozessobjekten (PO1,...,POn) zugeordneten Alarmmeldungen (A1,..,An) in einer Baumstruktur abzubilden.

6. Leitsystem (14) nach einem der Ansprüche 3 bis 5, wobei der Visualisierungs-Generator (2) weiterhin dazu ausgestaltet ist bei einem Aufruf zur grafischen Darbietung der Schrittkette (SK) neben die Zustands-Objekte (ZO1,ZO2,ZO3) und die Zustandsübergangs-Objekte (ZÜ1,ZÜ2,ZÜ3) Alarmmarker (AM) zu setzen, in welchen der jeweilige das Zustands-Objekt (ZO1,ZO2,ZO3) und/oder das Zustandsübergangs-Objekt (ZÜ1,ZÜ2,ZÜ3) betreffende Alarmtyp (H,W,L) angezeigt wird.

7. Leitsystem (14) nach Anspruch 6, wobei der Alarmmarker (AM) als ein interaktives Bedienobjekt ausgestaltet ist und der Visualisierungs-Generator (2) weiterhin dazu ausgestaltet ist bei einer Interaktion mit dem Alarmmarker (AM) eine Alarmansicht (33) einzublenden.

FIG 1

FIG 2

FIG 3

FIG 4

SFC standard view

Status: ▶ Run
Sequencer: ▶ RUN
Step: Step_2
Held Sequencer:
Held Step:

Command Output ☑ M 🔓
Cyclic Operation ☑ T
Time Monitoring ☐

C H W

Start — Z01
Transition_1 — ZÜ1

Step_1 — Z02
Transition_4 — ZÜ4
Step_2 — Z03
Transition_2 — ZÜ2
Transition_3 — ZÜ3
End — Z04

AM

32

SK

ZO 2    100 %

H
0 & 0    Result
monans2_pv    36.0 > 0
             60.0

30

EP 4 478 137 A1

# FIG 5

Europäisches
Patentamt

European
Patent Office

Office européen
des brevets

**EUROPÄISCHER RECHERCHENBERICHT**

Nummer der Anmeldung

EP 23 17 8732

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 508 928 A1 (SIEMENS AG [DE]) 10. Juli 2019 (2019-07-10) * Zusammenfassung * * Absatz [0002] – Absatz [0010] * * Absatz [0014] – Absatz [0032] * * Abbildungen * ----- | 1-7 | INV. G05B19/042 G05B19/05 G05B23/02 |
| X | EP 3 736 647 A1 (SIEMENS AG [DE]) 11. November 2020 (2020-11-11) * Zusammenfassung * * Absatz [0001] – Absatz [0025] * * Absatz [0031] – Absatz [0046] * * Abbildung 2 * ----- | 1-7 | |
| X | EP 3 495 903 A1 (SIEMENS AG [DE]) 12. Juni 2019 (2019-06-12) * Zusammenfassung * * Absatz [0001] – Absatz [0010] * * Absatz [0014] – Absatz [0028] * * Abbildungen * ----- | 1-7 | |
| X | Anonymous: "Product Data Sheet DeltaV Distributed Control System DeltaV (TM) Live", , 1. April 2023 (2023-04-01), Seiten 1-8, XP093104045, Gefunden im Internet: URL:https://www.emerson.com/documents/auto mation/product-data-sheet-deltav-live-delt av-en-3869350.pdf [gefunden am 2023-11-21] | 1 | RECHERCHIERTE SACHGEBIETE (IPC) G05B |
| A | * das ganze Dokument * ----- | 2-7 | |
| A | US 2018/114414 A1 (LAW GARY K [US] ET AL) 26. April 2018 (2018-04-26) * das ganze Dokument * ----- | 1-7 | |

Der vorliegende Recherchenbericht wurde für alle Patentansprüche erstellt

| Recherchenort | Abschlußdatum der Recherche | Prüfer |
|---|---|---|
| Den Haag | 22. November 2023 | Abbing, Ralf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 23 17 8732

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-11-2023

| Im Recherchenbericht angeführtes Patentdokument | Datum der Veröffentlichung | Mitglied(er) der Patentfamilie | Datum der Veröffentlichung |
|---|---|---|---|
| EP 3508928 A1 | 10-07-2019 | KEINE | |
| EP 3736647 A1 | 11-11-2020 | CN 113811823 A | 17-12-2021 |
| | | EP 3736647 A1 | 11-11-2020 |
| | | EP 3953774 A1 | 16-02-2022 |
| | | US 2022197257 A1 | 23-06-2022 |
| | | WO 2020225316 A1 | 12-11-2020 |
| EP 3495903 A1 | 12-06-2019 | CN 109871670 A | 11-06-2019 |
| | | EP 3495903 A1 | 12-06-2019 |
| | | US 2019171196 A1 | 06-06-2019 |
| US 2018114414 A1 | 26-04-2018 | CN 107976971 A | 01-05-2018 |
| | | DE 102017124802 A1 | 26-04-2018 |
| | | GB 2556694 A | 06-06-2018 |
| | | JP 7211672 B2 | 24-01-2023 |
| | | JP 2018106688 A | 05-07-2018 |
| | | US 2018114414 A1 | 26-04-2018 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3528074 B1
- EP 3067768 B1

- EP 3968107 B1